# EUROPÄISCHE PATENTSCHRIFT

(11) **EP 1 357 365 B1**
(45) Veröffentlichungstag und Bekanntmachung des Hinweises auf die Patenterteilung: **02.01.2013**
(21) Anmeldenummer: 03101025.9
(22) Anmeldetag: 15.04.2003
(51) Int. Cl.: G01D 5/14, G01D 5/16

(54) **Einrichtung zur Positionserfassung**
Position detecting apparatus
Détecteur de position

(30) Priorität: 22.04.2002 US 127785
(43) Veröffentlichungstag der Anmeldung: 29.10.2003
(73) Patentinhaber: DEERE & COMPANY, Moline, Illinois 61265-8098 (US)
(72) Erfinder: Gray, Keith Craig, Denver, IA 50622 (US); Wright, Walter Craig, Waterloo, IA 50701 (US); Killen, Dale H., Port Byron, IL 61275 (US)
(74) Vertreter: Holst, Sönke

(56) Entgegenhaltungen:
- DE-U1- 20 003 631
- US-A- 5 359 288
- US-A- 5 670 876
- US-A1- 2001 038 281

## Beschreibung

Die Erfindung betrifft eine Einrichtung zur Positionserfassung, mit einem ersten Element, einem gegenüber dem ersten Element verschiebbaren zweiten Element, das eine Mittelachse aufweist, einem am zweiten Element angebrachten ersten Magnetelement, einem am zweiten Element angebrachten zweiten, wendelförmigen Magnetelement, wobei sich der Abstand zwischen den Magnetelementen entlang der Länge des zweiten Elements ändert, und mit einem am ersten Element abgestützten, zur Erfassung eines Magnetfelds eingerichteten Sensor, der betreibbar ist, ein Ausgangssignal als Funktion eines relativen Abstands zwischen dem ersten Magnetelement und dem zweiten Magnetelement bereitzustellen, das auf die Position des zweiten Elements gegenüber dem ersten Element in der Verschieberichtung hinweist.

Sensoren für die Position des Kolbens eines Zylinders, die verschiedene Technologien nutzen, sind bekannt. Beispielsweise wurde ein integrierter Sensor, wie ein Sensor des magnetostriktiven Typs (hergestellt und vertrieben von MTS Systems Corporation und anderen) an einem Ende eines Zylinders angebracht und in eine Bohrung in der Kolbenstange eingesetzt. Dieser Sensor hat feste und bewegliche Teile innerhalb der Kolbenstange. Dazu ist ein recht großes Loch in die Kolbenstange zu bohren und einige Mittel zum Befestigen der Sensorelektronik am Ende des Zylinders erforderlich, und Mittel, um Signale aus dem Gehäuse hinaus zu übertragen. Derartige Sensoren arbeiten in erster Linie nur mit Kolbenstangen, die nur ein Ende haben. Die US 5 115 195 A beschreibt ein Design, das einen kurzen magnetostriktiven Sensor mit einer Vielzahl von Magneten zum Messen der Position eines beweglichen Körpers gegenüber einem festen Körper verwendet. Es wäre jedoch schwierig und kostenintensiv, einen derartigen Sensor und Magnete in einen hydraulischen Zylinder aufzunehmen.

Die US 5 539 993 A beschreibt ein System, bei dem ein Strichcode an der äußeren Oberfläche der Kolbenstange angebracht wird und die Position mit einem geeigneten Strichcodeleser festgestellt wird. Es ist auch bekannt, Rillen in die äußere Oberfläche einer Kolbenstange einzubringen, die Rillen zu verchromen und dann die Anzahl der Rillen zu "zählen", um die Position festzustellen. Dieses Verfahren kann den Weg bestimmen, aber keine absolute Position im Fall einer Zylinderverschiebung in einem nicht mit Strom versorgten Zustand.

Bestimmte Zylinderpositionserfassungseinrichtungen umfassen einen linearen Halleffekt-Sensor. Der Halleffekt-Sensor ist typischerweise jedoch nicht in den Zylinder integriert. Die US 5 201 838 A beschreibt eine Zylinderpositionserfassungseinrichtung, die ein Paar von Halleffekt-Sensoren verwendet und ein einzelner Permanentmagnet ist an einer Fläche des Kolbens befestigt. Ein derartiges Design erfordert jedoch einen sehr starken Magneten und kann wohl nur in einem kleinen Zylinder mit einem begrenzten Hub arbeiten. Die GB 2 108 678 A beschreibt ein Design mit einem Halleffekt-Sensor und einem außerhalb eines Kolbenzylindergehäuses angebrachten Magneten, das ein Element mit abgestuftem Durchmesser aufnimmt. Dieses Design erfordert jedoch ein Element mit abgestuftem Durchmesser und kann nur diskrete Positionen erfassen, die den Abschnitten des Elements mit den unterschiedlichen Durchmessern entsprechen.

Die US 6 253 460 A beschreibt ein Design eines Zylinderpositionssensors, der eine sich verjüngende Kolbenstange umfasst, die mit einem Nichteisenmaterial beschichtet ist. Der Sensor erfasst die Entfernung zwischen dem Sensor und der verjüngten Kolbenstange durch die Nichteisenbeschichtung. Ein derartiges Design ist schwierig herstellbar, da es schwierig und zeitaufwändig ist, eine derartige Nichteisenbeschichtung auf eine verjüngte Kolbenstange aufzubringen, und die äußere Oberfläche der Beschichtung gleichförmig sein muss, um eine gute Dichtung zu gewährleisten. Außerdem muss das Nichteisenmaterial hart genug sein, um die Festigkeits- und Belastungsanforderungen zu erfüllen, und es kann schwierig sein, eine Beschichtung zu erhalten, die stark und dennoch biegsam genug ist, um die Kolbenstange aufzubauen. Bei diesem Design können Schmutz oder Verunreinigungen zwischen der Beschichtung und dem Sensor unrichtige Messwerte bedingen.

Die US 5 359 288 A offenbart einen Positionsdetektionsapparat mit einem magnetischen Medium, das auf einem beweglichen Element angebracht ist, und einem magnetischen Feldsensor, wie ein Hallelement, der auf einem festen Element befestigt ist. Das magnetische Medium hat verschiedene Bereiche mit verschiedenen Polaritäten. Es erscheint jedoch so, dass ein derartiges Design ungenaue Messungen ergeben würde, wenn das bewegliche Element quer zu seiner axialen Abmessung bewegt würde, und daher würde ein derartiges Design in einem hydraulischen Zylinder nicht genau arbeiten, in dem die Kolbenstange rotieren oder sich senkrecht zu ihrer normalen Bewegungsrichtung bewegen kann.

Die US 2001/0038281 A beschreibt einen Positionssensor, der ein linear bewegliches Element umfasst, dessen Position durch einen ortsfesten Sensor erfassbar ist. Das bewegliche Element trägt einen sich um den Umfang des Elements erstreckenden Ringmagneten und einen spiralförmigen Magneten, der im axialen Abstand vom Ringmagneten angeordnet ist. Der Sensor arbeitet magnetostriktiv und erfasst jeweils die Entfernung zwischen einem Modenkonverter einerseits und den beiden Magneten andererseits.

Die der Erfindung zu Grunde liegende Aufgabe wird darin gesehen, eine kompakte, robuste und genaue Einrichtung zur Erfassung der Position eines Zylinders bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Einrichtung zur Erfassung der Position eines zweiten Elements vorgeschlagen, das gegenüber einem ersten Element verschiebebeweglich ist. Das zweite Element trägt zwei Magnetelemente, deren relativer Abstand abhängig von der Position entlang des zweiten Elements variiert. Die Magnetelemente erstrecken sich entlang der Länge des zweiten Elements. Dabei erstreckt sich das erste Magnetelement axial, während das andere Magnetelement wendelförmig ist, um einen über die Länge variierenden Abstand zu realisieren. Somit ändert sich, betrachtet man die Magnetelemente von einer Position am ersten Element aus, beim Verschieben des zweiten Elements der Abstand der Magnetelemente untereinander. Dieser Abstand wird durch einen zur Erfassung des von den beiden Magnetelementen erzeugten Magnetfeldes eingerichteten Sensor erfasst. Das Ausgangssignal des Sensors enthält daher eine Information über die Position des zweiten Elements gegenüber dem ersten Element. Eine Auswertungseinrichtung kann das Ausgangssignal elektronisch in ein Abstandssignal umwandeln.

Auf diese Weise erhält man eine kompakte, robuste und genaue Einrichtung zur Positionserfassung. Da nur der relative Abstand der beiden Magnetelemente erfasst wird, kann die Position auch unabhängig von einer Drehung des zweiten Elements gegenüber dem ersten Element erfasst werden. Die Magnetelemente sind in der Regel Permanentmagnete, obwohl in bestimmten Anwendungsfällen auch die Verwendung von Elektromagneten denkbar wäre.

Die Magnetelemente werden vorzugsweise in Nuten des zweiten Elements angeordnet, von denen eine beispielsweise axial und die andere wendelförmig verläuft. Es können auch beide Nuten bzw. Magnetelemente gegensinnig und/oder mit unterschiedlichen Steigungen wendelförmig sein.

Das zweite Element ist vorzugsweise aus einer mittigen Stange und einer sie umschließenden Hülse zusammengesetzt. Die Magnetelemente können an der inneren Oberfläche der Hülse befestigt werden, insbesondere an dort vorgesehenen Nuten.

Das erste Element kann ein hohles zylindrisches Gehäuse mit einem ringförmigen Endstück aufweisen. Durch eine mittige Bohrung im Endstück erstreckt sich das dort verschiebbar gelagerte zweite Element.

Um mit dem Sensor die von den Magnetelementen erzeugten Felder erfassen zu können, ist es sinnvoll, die Hülse und, wenn der Sensor dort angeordnet ist, auch das Endstück aus nicht magnetisierbarem Material herzustellen. Es kommen daher insbesondere Nichteisenmaterialien in Frage, obwohl auch Edelstahl verwendbar wäre.

Die Einrichtung zur Positionserfassung soll insbesondere für einen Hydraulikzylinder mit einem Kolben und einer Kolbenstange Verwendung finden. Das erste Element ist dann das Gehäuse des Zylinders, während das zweite Element der Kolbenstange entspricht.

In den Zeichnungen ist ein nachfolgend näher beschriebenes Ausführungsbeispiel der Erfindung dargestellt. Es zeigt:
- Fig. 1: eine perspektivische Ansicht einer erfindungsgemäßen Ausführungsform mit entfernten Abschnitten,
- Fig. 2: eine Querschnittsseitenansicht der Einrichtung zur Erfassung der Position des Zylinders aus Figur 1,
- Fig. 3: eine Ansicht entlang der Linien 3-3 der Figur 2,
- Fig. 4: eine Ansicht entlang der Linien 4-4 der Figur 2, und
- Fig. 5: eine Ansicht entlang der Linien 5-5 der Figur 2.

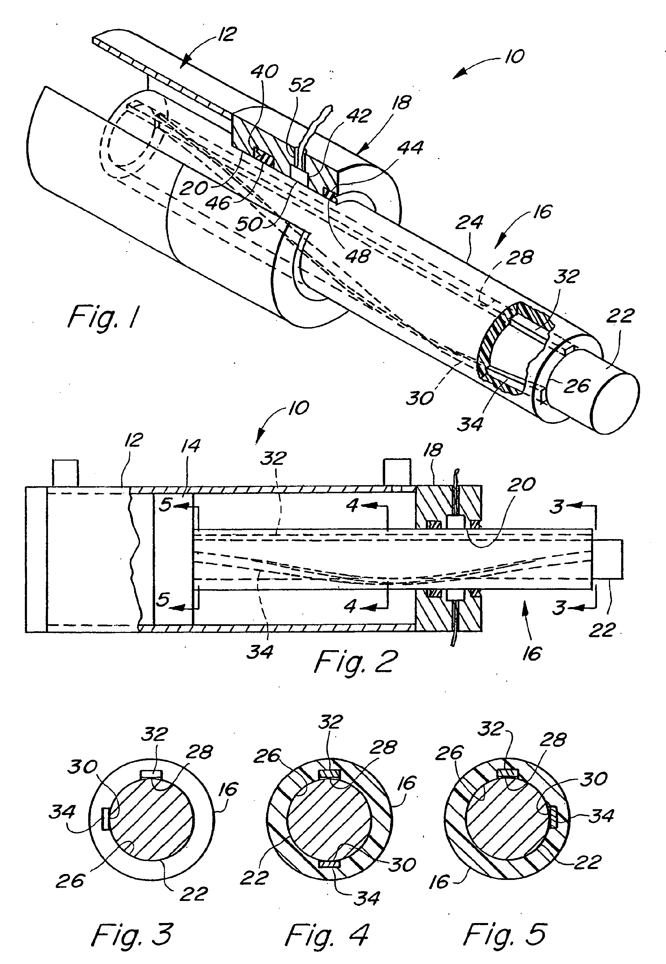

Es wird auf die Figuren 1 und 2 Bezug genommen, gemäß denen die Einrichtung 10 zur Erfassung der Position des Zylinders ein Zylindergehäuse 12 umfasst, das einen Kolben 14 verschieblich aufnimmt, der an einem Ende eines Schafts oder eines Kolbenstangenzusammenbaus 16 angebracht ist. Das Gehäuse 12 bildet ein Endstück 18, das eine mittige Bohrung aufweist, die den Kolbenstangenzusammenbau 16 aufnimmt.

Der Kolbenstangenzusammenbau 16 umfasst eine Basis- oder zentrale Stange 22 und eine hohle zylindrische Hülse 24 aus Nichteisenmaterial mit einer mittigen Bohrung 26, die die Stange 22 aufnimmt. Erste und zweite Nuten 28 und 30 sind in der Oberfläche der Bohrung 26 geformt, so dass die Trennung zwischen den Nuten 28 und 30 als eine Funktion der axialen Position entlang der Stange 22 variiert. Die erste Nut 28 kann sich in der Oberfläche der Bohrung 26 axial erstrecken und parallel zu einer mittigen Achse der Stange 22 sein. Die zweite Nut 30 kann eine Wendelform haben.

Ein erstes Magnetelement 32 ist in der ersten Nut 28 angebracht und hat vorzugsweise Nord- und Südpole, die in einer radialen Richtung orientiert sind. Ein zweites Magnetelement 34 ist in der zweiten Nut 30 angebracht und hat vorzugsweise auch Nord- und Südpole, die in einer radialen Richtung orientiert sind. Alternativ könnten die Nuten 28, 30 in einer äußeren Oberfläche der Stange 22 geformt sein.

Ringförmige Nuten 40, 42 und 44 sind in der Oberfläche der Bohrung 20 im Endstück 18 geformt und axial voneinander beabstandet. Eine Hochdruckdichtung 46 ist in der Nut 40 angebracht und greift abdichtend an der äußeren Oberfläche der Hülse 24 an. Eine Schleifdichtung 48 ist in der Nut 44 angebracht und greift abdichtend an der äußeren Oberfläche der Hülse 24 an.

Ein Sensor 50, wie beispielsweise ein magnetostriktiver Sensor, ist in der Nut 42 angebracht. Der Sensor kann ein einzelner ringförmiger Magnetfeldsensor oder eine ringförmig angeordnete Menge einer Vielzahl an Magnetfeldsensoren oder ein ähnlicher Sensor sein, der geeignet ist, den Abstand zwischen zwei Magneten zu fühlen. Derartige Sensoren werden von der MTS Systems Corporation hergestellt. Eine radiale Bohrung 52 ist im Endstück 18 bereitgestellt, um elektrische Leitungen aufzunehmen, um Signale vom Sensor 50 nach außen zu kommunizieren. Alternativ kann der Sensor 50 in einem separaten Ring (nicht gezeigt) angebracht sein, der am Kolbenstangenzusammenbau 16 angebracht ist.

Wie am Besten anhand der Figur 3 erkennbar ist, ist die Nut 28 an einem Ende der Hülse 24 von der Nut 30 um einen Winkel von etwa 90° im Uhrzeigersinn winkelversetzt beabstandet. Wie am Besten anhand der Figur 4 erkennbar ist, sind die Nuten 28 und 30 am Mittelpunkt der Nuten um einen Winkel von etwa 180° winkelversetzt beabstandet. Wie am Besten anhand der Figur 5 erkennbar ist, ist die Nut 28 am anderen Ende der Nuten von der Nut 30 um einen Winkel von etwa 90° im Gegenuhrzeigersinn winkelversetzt beabstandet.

Wenn der Kolbenstangenzusammenbau 16 sich in das Gehäuse 12 hinein und daraus hinaus bewegt, ändert sich der relative Abstand zwischen den Teilen der Magnete 32 und 34, die sich innerhalb des Sensors 50 befinden, und als Reaktion auf diese sich ändernde Entfernung erzeugt der Sensor 50 ein Ausgangssignal, das auf die Position des Kolbenstangenzusammen-baus 50 im Gehäuse 12 hinweist.

Dieser Zusammenbau 10 zur Erfassung der Position ist relativ unempfindlich gegenüber einer Drehung des Kolbenstangenzusammenbaus 16, da eine Drehung nicht den relativen Abstand zwischen den Magneten 32 und 34 ändert.

Die Nut 30 ist vorzugsweise eine gleichbleibend wendelförmige Nut von einem Ende des Kolbenstangenzusammenbaus 16 zum anderen Ende, wobei die Enden der Nut voneinander nicht mehr als einen vorbestimmten Winkel winkelversetzt sind. Die wendelförmige Nut 30 kann von der geradlinigen Nut 28 an einem Ende um 45° versetzt sein, und am anderen Ende um 225°, um einen festen minimalen Abstandswinkel zwischen den Nuten 28 und 30 zu gewährleisten; das ist aber nicht unbedingt notwendig.

Wenn die Nuten 28, 30 in der Stange 22 geformt sind, anstelle in der Hülse 24, muss die Stange 22 aus einem Nichteisenmaterial hergestellt werden, oder wenn sie aus Eisenmaterial ist, muss das Magnetmaterial vom Stangenmaterial isoliert werden. Alternativ könnte magnetisches Material auf der Oberfläche der Stange 22 oder einer Oberfläche der Hülse 24 aufgebracht werden.

Bei diesem Design brauchen keine Löcher in die Stange 22 gebohrt zu werden und der Sensor 50 ist außerhalb der unter Druck stehenden Kammer des Zylinders angeordnet. Im Ergebnis braucht der Sensor nicht den Drücken des Zylinders zu widerstehen und die Festigkeit der Stange 22 muss nicht durch eine entlang ihrer Mitte eingebrachte Bohrung gefährdet werden.

## Patentansprüche

1. Einrichtung (10) zur Positionserfassung, mit einem ersten Element, einem gegenüber dem ersten Element verschiebbaren zweiten Element, das eine Mittelachse aufweist, einem am zweiten Element angebrachten ersten Magnetelement (32), einem am zweiten Element angebrachten zweiten, wendelförmigen Magnetelement (34), wobei sich der Abstand zwischen den Magnetelementen (32, 34) entlang der Länge des zweiten Elements ändert, und mit einem am ersten Element abgestützten, zur. Erfassung eines Magnetfelds eingerichteten Sensor (50), der betreibbar ist, ein Ausgangssignal als Funktion eines relativen Abstands zwischen dem ersten Magnetelement (32) und dem zweiten Magnetelement (34) bereitzustellen, das auf die Position des zweiten Elements gegenüber dem ersten Element in der Verschieberichtung hinweist, **dadurch gekennzeichnet, dass** sich das erste Magnetelement (34) parallel zur Mittelachse des zweiten Elements erstreckt.

2. Einrichtung nach Anspruch 1, wobei eine erste Nut (28) im zweiten Element vorgesehen ist, die sich parallel zu einer Mittelachse des zweiten Elements erstreckt, das erste Magnetelement (32) in der ersten Nut (28) angeordnet ist, eine zweiten Nut (30) im zweiten Element vorgesehen ist, die wendelförmig und von der ersten Nut (28) beabstandet ist, und das zweite Magnetelement (34) in der zweiten Nut (30) angeordnet ist.

3. Einrichtung (10) nach Anspruch 1 oder 2, wobei das zweite Element eine zylindrische Stange (22) und eine hohle zylindrische Hülse (24) umfasst, in der die Stange (22) aufgenommen ist.

4. Einrichtung (10) nach Anspruch 3, wobei die erste Nut (28) und die zweite Nut (30) in einer inneren Oberfläche der Hülse (24) geformt sind.

5. Einrichtung (10) nach Anspruch 3 oder 4, wobei das erste Element ein hohles zylindrisches Gehäuse (12) umfasst, das ein Endstück (18) mit einer sich durch das Endstück (18) erstreckenden Bohrung (20) aufweist, wobei die Hülse (24) verschiebbar an einer Wand der Bohrung (20) anliegt.

6. Einrichtung (10) nach einem der Ansprüche 3 bis 5, wobei die Hülse (24) und/oder das Endstück (18) aus Nichteisenmaterial sind.

7. Einrichtung (10) nach Anspruch 5 oder 6, wobei eine ringförmige Sensornut (42) in einer Oberfläche der Bohrung (20) geformt und der Sensor (50) in der Sensornut (42) angebracht ist.

8. Einrichtung (10) nach Anspruch 7, wobei eine erste Dichtungsnut (40) und eine zweite Dichtungsnut (44) in der Oberfläche der Bohrung (20) an gegenüberliegenden Seiten der Sensornut (42) geformt sind, ein Hochdruckdichtungselement (46) in der ersten Dichtungsnut (40) angeordnet ist und dichtend und verschiebbar an einer äußeren Oberfläche der Hülse (24) anliegt, und ein Schleifdichtungselement (48) in der zweiten Dichtungsnut (44) angeordnet ist und dichtend und verschiebbar an einer äußeren Oberfläche der Hülse (24) anliegt.

9. Hydraulischer Zylinder mit einer Einrichtung nach einem der vorhergehenden Ansprüche.

## Claims

1. Position detecting apparatus (10), with a first element, a second element which is displaceable in relation to the first element and has a centre axis, a first magnet element (32) which is attached to the second element, a second, helical magnet element (34) which is attached to the second element, wherein the distance between the magnet elements (32, 34) changes along the length of the second element, and with a sensor (50) which is supported on the first element, is designed for detecting a magnetic field and can be operated to provide an output signal as a function of a relative distance between the first magnet element (32) and the second magnet element (34), said output signal indicating the position of the second element in relation to the first element in the displacement direction, **characterized in that** the first magnet element (34) extends parallel to the centre axis of the second element.

2. Apparatus according to Claim 1, wherein a first groove (28) is provided in the second element, said groove extending parallel to a centre axis of the second element, the first magnet element (32) is arranged in the first groove (28), a second groove (30) is provided in the second element, said second groove being helical and being spaced apart from the first groove (28), and the second magnet element (34) is arranged in the second groove (30).

3. Apparatus (10) according to Claim 1 or 2, wherein the second element comprises a cylindrical rod (22) and a hollow cylindrical sleeve (24) in which the rod (22) is accommodated.

4. Apparatus (10) according to Claim 3, wherein the first groove (28) and the second groove (30) are formed in an inner surface of the sleeve (24).

5. Apparatus (10) according to Claim 3 or 4, wherein the first element comprises a hollow cylindrical housing (12) which has an end piece (18) with a bore (20) extending through the end piece (18), wherein the sleeve (24) bears displaceably against a wall of the bore (20).

6. Apparatus (10) according to one of Claims 3 to 5, wherein the sleeve (24) and/or the end piece (18) are/is made from nonferrous material.

7. Apparatus (10) according to Claim 5 or 6, wherein an annular sensor groove (42) is formed in a surface of the bore (20) and the sensor (50) is mounted in the sensor groove (42).

8. Apparatus (10) according to Claim 7, wherein a first sealing groove (40) and a second sealing groove (44) are formed in the surface of the bore (20) on opposite sides of the sensor groove (42), a highpressure sealing element (46) is arranged in the first sealing groove (40) and bears in a sealing and displaceable manner against an outer surface of the sleeve (24), and a sliding sealing element (48) is arranged in the second sealing groove (44) and bears in a sealing and displaceable manner against an outer surface of the sleeve (24).

9. Hydraulic cylinder with an apparatus according to one of the preceding claims.

## Revendications

1. Dispositif (10) pour la détection de position, comprenant un premier élément, un deuxième élément déplaçable par rapport au premier élément, qui présente un axe médian, un premier élément magnétique (32) monté sur le deuxième élément, un deuxième élément magnétique de forme hélicoïdale (34) monté sur le deuxième élément, la distance entre les éléments magnétiques (32, 34) variant le long de la longueur du deuxième élément, et comprenant un capteur (50) supporté sur le premier élément, prévu pour détecter un champ magnétique, lequel peut fonctionner de manière à fournir un signal de sortie en fonction d'une distance relative entre le premier élément magnétique (32) et le deuxième élément magnétique (34), lequel indique la position du deuxième élément par rapport au premier élément dans la direction de déplacement, **caractérisé en ce que** le premier élément magnétique (32) s'étend parallèlement à l'axe médian du deuxième élément.

2. Dispositif selon la revendication 1, dans lequel une première rainure (28) est prévue dans le deuxième élément, laquelle s'étend parallèlement à un axe médian du deuxième élément, le premier élément magnétique (32) est disposé dans la première rainure (28), une deuxième rainure (30) est prévue dans le deuxième élément, laquelle est sous forme hélicoïdale et est espacée de la première rainure (28), et le deuxième élément magnétique (34) est disposé dans la deuxième rainure (30).

3. Dispositif (10) selon la revendication 1 ou 2, dans lequel le deuxième élément comprend une tige cylindrique (22) et une douille creuse cylindrique (24) dans laquelle est reçue la tige (22).

4. Dispositif (10) selon la revendication 3, dans lequel la première rainure (28) et la deuxième rainure (30) sont formées dans une surface interne de la douille (24).

5. Dispositif (10) selon la revendication 3 ou 4, dans lequel le premier élément comprend un boîtier cylindrique creux (12), qui présente un embout (18) avec un alésage (20) s'étendant à travers l'embout (18), la douille (24) s'appliquant de manière déplaçable contre une paroi de l'alésage (20).

6. Dispositif (10) selon l'une quelconque des revendications 3 à 5, dans lequel la douille (24) et/ou l'embout (18) sont en matériau non ferreux.

7. Dispositif (10) selon la revendication 5 ou 6, dans lequel une rainure de capteur annulaire (42) est formée dans une surface de l'alésage (20) et le capteur (50) est installé dans la rainure de capteur (42).

8. Dispositif (10) selon la revendication 7, dans lequel une première rainure d'étanchéité (40) et une deuxième rainure d'étanchéité (44) sont forées dans la surface de l'alésage (20) sur des côtés opposés de la rainure de capteur (42), un élément d'étanchéité haute pression (46) est disposé dans la première rainure d'étanchéité (40) et s'applique de manière hermétique et déplaçable contre une surface extérieure de la douille (24), et un élément d'étanchéité à friction (48) est disposé dans la deuxième rainure d'étanchéité (44) et s'applique de manière hermétique et déplaçable contre une surface extérieure de la douille (24).

9. Cylindre hydraulique comprenant un dispositif selon l'une quelconque des revendications précédentes.
